Europäisches Patentamt

European Patent Office

Office européen des brevets

(19)

(11) Publication number: **0 172 461 B1**

# EUROPEAN PATENT SPECIFICATION

(12)

(45) Date of publication of patent specification: **24.04.91**  (51) Int. Cl.⁵: **G01N 27/74**

(21) Application number: **85109573.7**

(22) Date of filing: **30.07.85**

(54) Apparatus and method for measuring the concentration of a paramagnetic gas.

(30) Priority: **21.08.84 US 642972**

(43) Date of publication of application:
**26.02.86 Bulletin 86/09**

(45) Publication of the grant of the patent:
**24.04.91 Bulletin 91/17**

(84) Designated Contracting States:
**DE FR GB**

(56) References cited:
**DE-C- 858 030**
**US-A- 3 845 660**

**TM TECHNISCHES MESSEN, vol. 47, no. 9,
September 1980, pages 337-340, Munich, DE;
R. FAULHABER: "Gerätesystem für die
Prozess-Gasanalyse"**

(73) Proprietor: **Hewlett-Packard Company
Mail Stop 20 B-O, 3000 Hanover Street
Palo Alto, California 94304(US)**

(72) Inventor: **Karrer, Henry Edward
570 Kingsley Avenue
Palo Alto California 94301(US)**

(74) Representative: **Schoppe, Fritz, Dipl.-Ing.
Seitnerstrasse 42
W-8023 Pullach bei München(DE)**

## Description

The present invention relates to an apparatus for measuring the concentration of paramagentic gas in a gaseous mixure in accordance with the prior art portion of claim 1 and to a method for measuring the concentration of paramagnetic gas in a gaseous mixture in accordance with the prior art portion of claim 9.

A method and an apparatus of the above type are known from DE-C-858030. This reference discloses an apparatus for determining whether a predetermined minimum concentration of paramagnetic gas is contained in a gaseous mixture. This prior art apparatus comprises field generating means for generating an essentially homogeneous magnetic field which is subject to periodical oscillations. This results in periodical adiabatic volume changes of the paramagnetic gas in the gaseous mixture. The resonator coupled to the test chamber oscillates if the volume change within the test chamber exceeds a certain percentage.

Thus, the measuring principle underlying the prior art apparatus in accordance with DE-C-858030 requires the generation of a periodically changing homogeneous magnetic field to thereby create periodical adiabatic volume changes of paramagnetic gas. Moreover, this prior art apparatus is unsuitable for generating an output signal, the amplitude of which is indicative of the concentration of paramagnetic gas. Rather, this prior art apparatus is merely suitable for determining whether or not the test gas contains a miniumum concentration of paramagnetic gas.

Another prior art apparatus is known from US-A-3584499. The known apparatus comprises a test chamber disposed in the gap of an electromagnet having a first inlet conduit for receiving the sample gas to be analysed and a further inlet conduit for receiving a reference gas of known magnetic susceptibility and a common outlet conduit for the sample and the reference gas. The test chamber is disposed such that the magnetic field inside the chamber is substantially homogeneous with the exception of small regions near the inlet and the outlet tubes where the homogeneous field is disturbed. The inlet and outlet conduit are connected via additional conduits to the two inlet ports of a pressure difference detector to measure the difference in pressure between the sample gas and the reference gas. Since the susceptibility of the reference gas is known, the oxygen content can be calculated from the measured pressure difference.

The known apparatus requires the use of strong plates of nonferromagnetic material between the end faces of the electromagnet in order to reduce magnetomechanical deformation of the chamber which would impair the accuracy of the measuring values. Furthermore, the known apparatus has a comparatively complicated tubing system and uses a test chamber having unusually shaped passageways for the gases so that it is difficult to manufacture.

TM Technisches Messen, Vol. 47 (1980) Sept., No. 9, pages 337 to 340, discloses an apparatus for measuring the concentration of paramagnetic gas in a gaseous mixture comprising a test chamber disposed in the gap of an electromagnet generating an essentially homogeneous magnetic field within the gap. It has a first inlet for receiving a sampler gas to be analyzed and second inlet for receiving a reference gas of known magentic susceptibility and a common outlet for the sample gas and the reference gas. A pressure difference detector is connected to two conduits connected to the test chamber in the region of the respective inlet ports for measuring the pressure difference between the sample gas and the reference gas which is caused by different volume changes of the sample gas and the reference gas due to the periodical changing of the essentially homogeneous magnetic field. This technique is evaluated above with reference to US-A-3584499.

Relative to this prior art, it is the object of the invention to create an apparatus according to the preamble of claim 1 which has a simpler construction.

According to the invention, this object is solved by the characterizing features of claim 1.

According to an underlying concept of the invention, the magnetic forces exerted by an oscillating inhomogeneous magnetic field on the paramagnetic particles in a gaseous mixture to be analysed can be utilized to produce an acoustic wave within the test chamber at the same frequency as the oscillation frequency of the magnetic field. The acoustic wave is detected by an acoustic detector inside the test chamber and the amplitude of the wave gives an indication of the concentration of the paramagnetic gas in the gaseous mixture. Thus, an apparatus according to the invention does not require the complicated test chamber and tubing system with conduits for the sample gas and for a reference gas as the apparatus according to US-A-3 584 499. The invention has the additional advantage that the response time is substantially smaller than in the known apparatus and is only limited by the speed of sound in the gas being analyzed.

According to claim 3, the concentration of the paramagnetic gas and the flow rate can be measured simultaneously. From these two measuring values, oxygen uptake can be measured with an accuracy of better than 0.1 percent.

According to claim 6, the acoustic wave can be detected in synchronism with the oscillations of the magnetic field, so that the signal to noise ratio can be increased. For example, if the electric source provides a continuous wave signal, then synchronous detection may be utilized; if the source provides a pulsed signal, then a matched filter detector may be used.

The invention has the following further advantages:

The concentration of oxygen in a sample gas flowing in a conduit can be noninvasively measured. The sensor does not consume oxygen as do many other types of existing oxygen sensors.

Subsequently, embodiments of the invention are explained in detail with reference to the drawings.

Figure 1 is a diagram illustrating a first embodiment of the invention.

Figure 2 is a diagram illustrating a modification of the first embodiment.

Figure 3 is a diagram illustrating another embodiment of the invention.

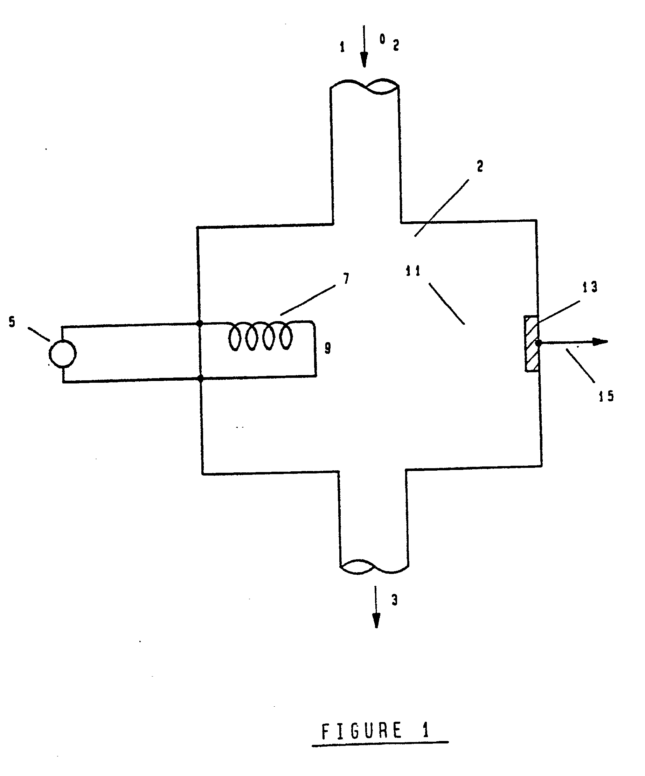

Referring to Figure 1, a sample gas comprising a mixture of gases, including oxygen, enters the test chamber 2 at the inlet port 1 and exits at the outlet port 3. A solenoid 7 is driven by a continuous wave (CW) or pulsed source 5. The solenoid 7 can be disposed either inside or outside of the test chamber 2. The source 5 provides an electrical signal ($F_{in}$) with a frequency $f_o$ in the range 1 kHz to 10 MHz. The solenoid in response to $F_{in}$ generates a pulsating magnetic field at this same frequency $f_o$. Any oxygen present in the sample gas will be drawn towards the region 9 of the magnetic field where the field gradient is strongest. Non-magnetic gases present in the sample gas will be unaffected by the magnetic field. The effect of the magnetic field upon the sample gas is to create a local pressure disturbance when any oxygen present is drawn towards the region 9 and to generate a sound or acoustic wave 11 at frequency $f_o$. The acoustic wave 11 will propagate from region 9 to a microphone or acoustic detector 13. The detector 13 will output a signal on line 15 whose amplitude will be proportional to the magnitude of the acoustic wave 11 and hence indicative of the concentration of oxygen present in the sample gas. If no oxygen were present in the sample gas, no acoustic wave would be generated.

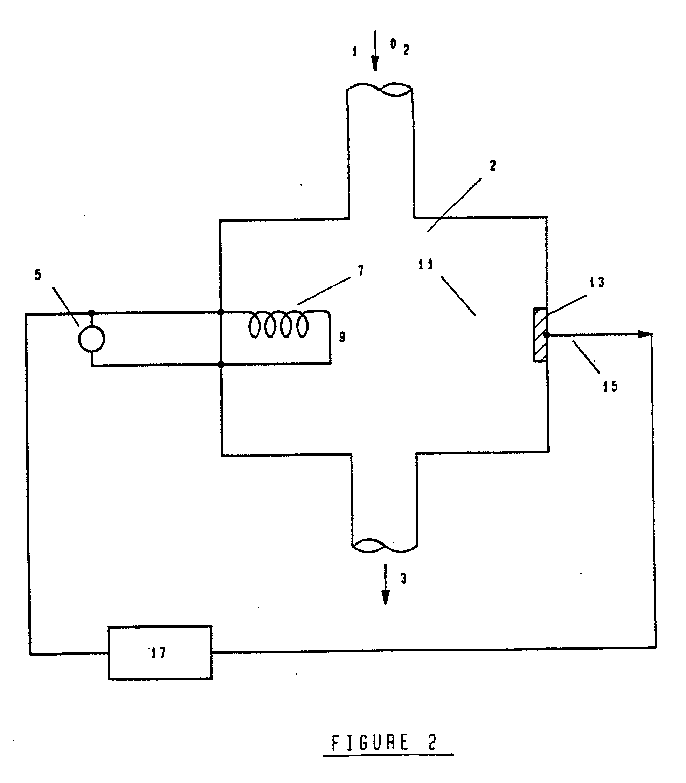

Referring now to Figure 2, the apparatus of Figure 1 has been modified to include a synchronizing circuit 17 which gates the detector 13 at the CW frequency $f_o$, and synchronizes the detector 13 with the CW source 5. This modification provides a very narrow band output signal from the detector 13 and greatly improves the signal to noise ratio. Similarly, if the source 5 is singly pulsed, the detector 13 can be gated to detect the acoustic pulse only at a specific time; if the source 5 provides a pulse train, a corresponding matched filter may be utilized.

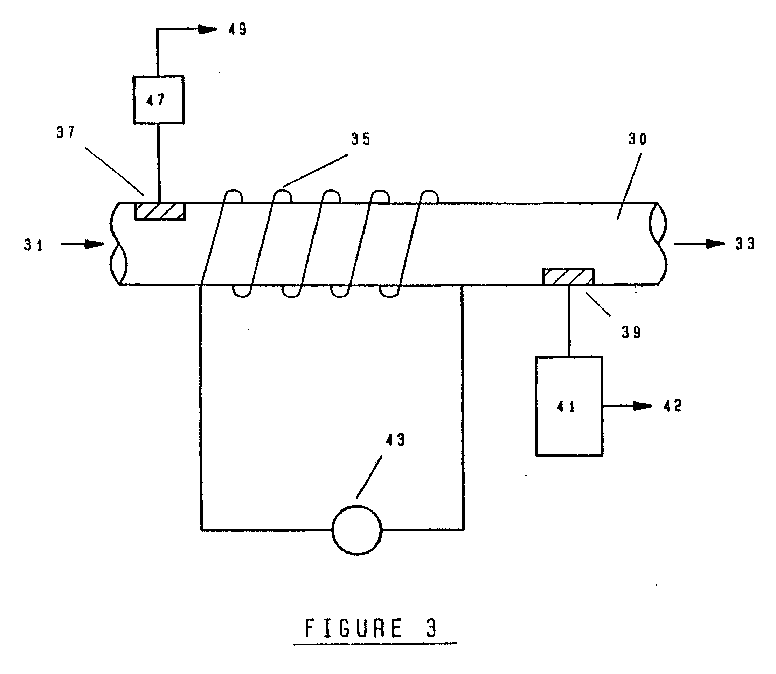

Figure 3 illustrates another embodiment of the invention which provides the capability to non-invasively measure oxygen concentration in a gas flowing in a pipe or conduit 30. A coil 35 is mounted axially on the pipe section 30 and the sample gas mixture enters at 31 and flows through the core section of coil 35 exiting at 33. A CW or pulsed source 43 provides an electrical signal $F_{in}$ having a frequency $f_o$ which is applied to the coil 35 generating a pulsating magnetic field at frequency fo. The effect of the magnetic field on the oxygen present in the sample gas will generate an acoustic wave which propagates down the pipe 30. A microphone or pressure detector 39, downstream of the solenoid 35, detects the passage of the pressure disturbance and outputs a signal to the detector circuit 41. The amplitude of the detector circuit 41 output signal on line 42 is proportional to the amount of oxygen present in the sample gas. An additional detector 37 may be added on the upstream side of the solenoid 35. When the solenoid 35 is pulsed, an acoustic wave is generated in the sample gas at each end of the solenoid 35. The acoustic waves will generate equal amplitude signals at the detectors 37 and 39 if the detectors are equidistant from the solenoid 35. However, the acoustic waves will arrive at the respective detectors at different times since one wave is propagating through the gas in the direction of flow of the gas, and the other wave is propagating opposite to the direction of gas flow. This time difference may be used in the rate circuit 47 to provide an output signal on line 49 proportional to the velocity or flow rate of the sample gas in the conduit.

A solenoid is not the only possible source of the magnetic field, the only requirement is that the magnetic field have a high gradient.

**Claims**

1. An apparatus for measuring the concentration of paramagnetic gas in a gaseous mixture, comprising
   - a test chamber (2) or a conduit (30) having an inlet (1;31) and an outlet (3;33),
   - field generating means (7;35) for generating an oscillating magnetic field in response to signals from a source (5;43), and
   - an acoustic detector (13;39)
   characterized in that
   - the field generating means (7:35) are arranged such that a region of high magnetic field intensity gradient is established within said test chamber (2) or conduit (30) for accelerating the paramagnetic gas towards said region of high magnetic field intensity gradient to thereby generate an acoustic wave; and

- the acoustic detector (13;39) is disposed within the test chamber (2) or conduit (30) for providing an output signal, the amplitude of which is indicative of the concentration of paramagnetic gas in the gaseous mixture.

2. An apparatus according to claim 1, **characterized** in that

- the test chamber is a conduit (30) through which the gaseous mixture flows,
- the field generating means (35) is disposed adjacent to the conduit such as to provide a region of inhomogeneous magnetic field inside the conduit for generating acoustic waves propagating longitudinally along the conduit, and
- the acoustic detector (39) is disposed on the side wall of the conduit.

3. An apparatus according to claim 2, **characterized** in that

- an additional acoustic detector (37) is disposed on the side wall of the conduit such that the two detectors (37;39) are on opposite sides of and equidistant from the field generating means (35),
- a circuit is provided for determining the time interval between the arrival times of the acoustic wave at the two detectors and for deriving from this time difference and from the indication of the concentration of the paramagnetic gas an indication of the flow rate of the gaseous mixture.

4. An apparatus according to claim 2 or 3, **characterized** in that the field generating means comprise a solenoid (35) disposed around the conduit (30).

5. An apparatus according to any of the preceding claims, **characterized** in that the field generating means comprise a solenoid (7) and that the signal source (5) is coupled to the solenoid for providing periodical electrial signal at a predetermined frequency for exciting the field generating means to produce a magnetic field oscillating at the same frequency as the electrical signal.

6. An apparatus according to claim 5, **characterized** by

- a gating circuit for gating the acoustic detector (13) at the frequency of the oscillating magnetic field, and
- a synchronizing circuit (17) for synchronizing the gating circuit with the signal source (5).

7. An apparatus according to any of the preceding claims, **characterized** in that the oscillation frequency of the magnetic field is greater than approximately 1 kHz.

8. An apparatus according to any of the preceding claims, **characterized** in that the signal source (5) provides a continuous wave signal for exciting the field generating means (7).

9. Method for measuring the concentration of a paramagnetic gas in a gaseous mixture, comprising the steps of:

- first generating acoustic waves by applying a magnetic field to the gaseous mixture, and
- thereafter detecting the acoustic waves to generate a signal, **characterized** in that
- the step of generating acoustic waves comprises accelerating the paramagnetic gas within a region of high magnetic field intensity gradient, and
- the generated signal is indicative of the concentration of the paramagnetic gas in the gaseous mixture.

**Revendications**

1. Un appareil de mesure de la concentration d'un gaz paramagnétique dans un mélange gazeux, comprenant:

- une chambre de contrôle (2) ou un conduit (30) présentant une entrée (1; 31) et une sortie (3; 33),
- des moyens d'engendrement de champ (7; 35) pour engendrer un champ magnétique oscillant en réponse aux signaux d'une source (5; 43), et
- un détecteur acoustique (13; 39), caractérisé en ce que
- les moyens d'engendrement de champ (7; 35) sont disposés de telle manière qu'une zone à gradient élevé d'intensité de champ magnétique est créée dans ladite chambre de contrôle (2) ou conduit (3) pour accélérer le gaz paramagnétique vers ladite zone à gradient élevé d'intensité de champ magnétique, pour ainsi engendrer une onde acoustique; et

- le détecteur acoustique (13; 39) est disposé dans la chambre de contrôle (2) ou conduit (3) pour fournir un signal de sortie dont l'amplitude indique la concentration de gaz paramagnétique dans le mélange gazeux.

2. Un appareil suivant la revendication 1, caractérisé en ce que

- la chambre de contrôle est un conduit (30) à travers lequel circule le mélange gazeux,
- les moyens d'engendrement de champ (35) sont disposés adjacents au conduit, de manière à fournir une zone de champ magnétique non-homogène à l'intérieur du conduit, afin d'engendrer des ondes acoustiques se propageant longitudinalement le long du conduit, et
- le détecteur acoustique (39) est disposé sur la paroi latérale du conduit.

3. Un appareil suivant la revendication 2, caractérisé en ce que

- un détecteur acoustique supplémentaire (37) est disposé sur la paroi latérale du conduit, de manière que les deux détecteurs (37; 39) se trouvent de côtés opposés des moyens d'engendrement de champ (35) et équidistants de ceux-ci,
- il est prévu un circuit pour déterminer l'intervalle de temps entreles moments d'arrivée de l'onde acoustique aux deux détecteurs et pour déduire de cette différence de temps et de l'indication de concentration du gaz paramagnétique une indication du débit du mélange gazeux.

4. Un appareil suivant la revendication 2 ou 3, caractérisé en ce que les moyens d'engendrement de champ comprennent un solénoïde (35) disposé autour du conduit (30).

5. Un appareil suivant l'une ou l'autre des revendications précédentes, caractérisé en ce que les moyens d'engendrement de champ comprennent un solénoïde (7) et que la source de signaux (5) est couplée au solénoïde pour fournir un signal électrique périodique à une fréquence prédéterminée, afin d'activer les moyens d'engendrement de champ pour produire un champ magnétique oscillant à la même fréquence que le signal électrique.

6. Un appareil suivant la revendication 5, caractérisé par

- un circuit de déclenchement pour déclencher le détecteur acoustique (13) à la fréquence du champ magnétique oscillant, et
- un circuit de synchronisation (17) pour synchroniser le circuit de déclenchement avec la source de signaux (5).

7. Un appareil suivant l'une ou l'autre des revendications précédentes, caractérisé en ce que la fréquence d'oscillation du champ magnétique est supérieure à environ 1 kHz.

8. Un appareil suivant l'une ou l'autre des revendications précédentes, caractérisé en ce que la source de signaux (5) fournit un signal à onde continue pour activer les moyens d'engendrement de champ (7).

9. Méthode pour mesurer la concentration d'un gaz paramagnétique dans un mélange gazeux, comprenant les étapes de:

- tout d'abord, engendrement des ondes acoustiques en appliquant un champ magnétique au mélange gazeux, et
- ensuite, détection des ondes acoustiques pour engendrer un signal, caractérisé en ce que
- la phase d'engendrement d'ondes acoustiques comprend l'accélération du gaz paramagnétique dans une zone à gradient élevé d'intensitéde champ magnétique, et
- le signal engendré indique la concentration du gaz paramagnétique dans le mélange gazeux.

**Ansprüche**

1. Ein Gerät zum Messen der Konzentration eines paramagnetischen Gases in einem Gasgemisch, mit

- einer Testkammer (2) oder einem Rohr (30) mit einem Einlaß (1; 31) und einem Auslaß (3; 33),
- einer Felderzeugungseinrichtung (7; 35) zum Erzeugen eines schwingenden Magnetfeldes in Reaktion auf Signale von einer Quelle (5; 43) und
- einem akustischen Detektor (13; 39) dadurch gekennzeichnet, daß
- die Felderzeugungseinrichtung (7; 35) derart angeordnet ist, daß ein Bereich eines hohen Magnetfeldintensitätsgradienten innerhalb der Testkammer (2) oder des Rohres (30) zum Beschleunigen des paramagnetischen Gases in Richtung auf den Bereich des hohen Magnetfeldintensitätsgradienten erzeugt wird, um dadurch eine akustische Welle zu erzeugen; und

- der akustische Detektor (13; 39) innerhalb der Testkammer (2) oder des Rohres (30) angeordnet ist, um ein Ausgangssignal zu erzeugen, dessen Amplitude die Konzentration des paramagnetischen Gases in dem Gasgemisch anzeigt.

2. Ein Gerät gemäß Anspruch 1, dadurch gekennzeichnet, daß
    - die Testkammer eine Röhre (30) ist, durch die Gasgemisch fließt,
    - die Felderzeugungseinrichtung (35) nahe der Röhre in der Weise angeordnet ist, daß ein Bereich eines inhomogenen Magnetfeldes innerhalb der Röhre geschaffen wird, um akustische Wellen zu erzeugen, die sich längs der Röhre ausbreiten, und
    - der akustische Detektor (39) auf der Seitenwand der Röhre angeordnet ist.

3. Ein Gerät gemäß Anspruch 2, dadurch gekennzeichnet, daß
    - ein zusätzlicher akustischer Detektor (37) auf der Seitenwand der Röhre in der Weise angeordnet ist, daß die beiden Detektoren (37; 39) an entgegengesetzten Seiten der Felderzeugungseinrichtung (35) und gleichweit von dieser beabstandet angeordnet sind,
    - eine Schaltung vorgesehen ist, um den zeitlichen Abstand zwischen den Ankunftszeiten der akustischen Welle an den beiden Detektoren zu bestimmen und um von dieser Zeitdifferenz und von der Anzeige der Konzentration des paramagnetischen Gases eine Anzeige der Flußrate des Gasgemisches abzuleiten.

4. Ein Gerät nach Anspruch 2 oder 3, dadurch gekennzeichnet, daß
    die Felderzeugungseinrichtung ein Solenoid (35) aufweist, das um die Röhre (30) herum angeordnet ist.

5. Ein Gerät nach einem der vorhergehenden Ansprüche, dadurch gekennzeichnet, daß
    die Felderzeugungseinrichtung ein Solenoid (7) aufweist, und
    die Signalquelle (5) mit dem Solenoid gekoppelt ist, um ein periodisches elektrisches Signal von vorbestimmter Frequenz zum Erregen der Felderzeugungseinrichtung zu schaffen, um ein Magnetfeld zu erzeugen, das mit der gleichen Frequenz wie das elektrische Signal schwingt.

6. Ein Gerät nach Anspruch 5, gekennzeichnet durch,
    - eine Auftastschaltung zum Auftasten des akustischen Detektors (13) bei der Frequenz des schwingenden magnetischen Feldes, und
    - eine synchronisierende Schaltung (17) zum Synchronisieren der Auftastschaltung mit der Signalquelle (5).

7. Ein Gerät nach einem der vorhergehenden Ansprüche, dadurch gekennzeichnet, daß
    die Schwingungsfrequenz des Magnetfeldes größer als ungefähr 1 kHz ist.

8. Ein Gerät nach einem der vorhergehenden Ansprüche, dadurch gekennzeichnet, daß
    die Signalquelle (5) einen kontinuierlichen Signalverlauf zum Erregen der Felderzeugungseinrichtung (7) schafft.

9. Verfahren zum Messen der Konzentration eines paramagnetischen Gases in einem Gasgemisch, mit den Verfahrensschritten:
    - zunächst Erzeugen von akustischen Wellen durch Anlegen eines magnetischen Feldes an ein Gasgemisch, und
    - daraufhin Erfassen der akustischen Wellen, um ein Signal zu erzeugen, dadurch gekennzeichnet, daß
    - der Verfahrensschritt des Erregens der akustischen Wellen das Beschleunigen des paramagnetischen Gases innerhalb eines Bereiches eines hohen Magnetfeldintensitätsgradienten umfaßt, und
    - das erzeugte Signal die Konzentration des paramagnetischen Gases in dem Gasgemisch anzeigt.

FIGURE 1

FIGURE 2

FIGURE 3